(19) Europäisches Patentamt
European Patent Office
Office européen des brevets

(11) Veröffentlichungsnummer: **0 264 645 B1**

(12) # EUROPÄISCHE PATENTSCHRIFT

(45) Veröffentlichungstag der Patentschrift: **11.03.92**

(51) Int. Cl.[5]: **C08L 25/16**, C08L 33/06, //(C08L25/16,33:06),(C08L33/06, 25:16)

(21) Anmeldenummer: **87113795.6**

(22) Anmeldetag: **22.09.87**

Teilanmeldung 91114648.8 eingereicht am 22/09/87.

Die Akte enthält technische Angaben, die nach dem Eingang der Anmeldung eingereicht wurden und die nicht in dieser Patentschrift enthalten sind.

(54) **Verträgliche Polymermischungen (II).**

(30) Priorität: **24.09.86 DE 3632370**

(43) Veröffentlichungstag der Anmeldung: **27.04.88 Patentblatt 88/17**

(45) Bekanntmachung des Hinweises auf die Patenterteilung: **11.03.92 Patentblatt 92/11**

(84) Benannte Vertragsstaaten: **DE ES FR GB IT NL**

(56) Entgegenhaltungen: **DE-A- 3 436 476**

(73) Patentinhaber: **Röhm GmbH**
**Kirschenallee Postfach 4242**
**W-6100 Darmstadt 1(DE)**

(72) Erfinder: **Siol, Werner, Dr.**
**Goerdeler Weg 34**
**W-6100 Darmstadt(DE)**
Erfinder: **Terbrack, Ulrich**
**Berliner Strasse 3**
**W-6107 Reinheim 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der Erfindung

Die Erfindung betrifft verträgliche Polymermischungen (Polymer Blends) aus einer Cyclohexyl(meth)-acrylat als Monomers enthaltenden Polymerkomponente und einer α-Methylstyrol als Monomers enthaltenden Polymerkomponente.

Stand der Technik

In der Regel gelten unterschiedliche Polymerspecies als nicht miteinander verträglich, d.h. unterschiedliche Polymerspecies bilden bis hinab zu geringen Anteilen einer Komponente im allgemeinen keine homogene Phase aus, die durch völlige Mischbarkeit der Komponenten charakterisiert wäre.
Gewisse Ausnahmen von dieser Regel haben zunehmendes Interesse speziell bei den mit der theoretischen Deutung der Phänomene befaßten Fachleuten hervorgerufen.

Völlig kompatible Mischungen von Polymeren zeigen völlige Löslichkeit (Mischbarkeit) in allen Mischungsverhältnissen. Zum Nachweis der Mischbarkeit wurde häufig die Glastemperatur Tg oder die sogenannte "Optische Methode" (Klarheit eines aus homogener Lösung des Polymergemischs gegossenen Films) herangezogen. (Vgl. Brandrup-Immergut, Polymer Handbook, Ed., III-211-213).

Als ein weiterer Test auf die Mischbarkeit von unter sich verschiedenen Polymeren wird das Auftreten der unteren kritischen Lösungstemperatur (Lower Critical Solution Temperature = LCST) herangezogen. (Vgl. DE-A 34 36 476.5 und DE-A 34 36 477.3).
Das Auftreten der LCST beruht auf dem Vorgang, daß sich beim Erwärmen die bis anhin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte.
Beispiele für vorhandene Mischbarkeit stellen z.B. die Systeme Polyvinylidenfluorid mit Polymethylmethacrylat (PMMA) oder mit Polyethylmethacrylat dar.
(US-PS 3 253 060, US-PS 3 458 391, US-PS 3 459 834). Neuere Ergebnisse über "Polymer Blends" und mögliche Anwendung derselben werden von L.M. Robeson in Polym. Engineering & Science 24 (8) 587 - 597 (1984) berichtet.

Copolymere aus α-Methylstyrol und Maleinsäureanhydrid, sowie aus α-Methylstyrol und Acrylnitril sind unter gewissen Voraussetzungen mit Polymethylmethacrylat verträglich. Verträglichkeit wird auch in bestimmten binären und tertiären Systemen aus Copolymeren von Acrylnitril mit Vinylacetat und α-Methylstyrol gefunden. (C. Vasile et al. CA 90 : 39511a) Verträglichkeit von Copolymeren aus α-Methylstyrol und Acrylnitril ist auch mit Polyethylmethacrylat gegeben. Dagegen sind Poly-n-propylmethacrylat, Poly-isopropylmethacrylat und Polycyclohexylmethacrylat auch mit Copolymeren aus α-Methylstyrol und Acrylnitril nicht verträglich (vgl. auch S.H. Goh et. al., Polymer Engineering and Science, 22, 34 (1982)).
Damit verhalten sich Copolymere aus α-Methylstyrol und Maleinsäureanhydrid und Copolymere aus α-Methylstyrol und Acrylnitril ähnlich wie Copolymere aus Styrol und Maleinsäureanhydrid und Copolymere aus Styrol und Acrylnitril. Während also Copolymere aus Styrol und einem sehr polaren Monomeren (z.B. Acrylnitril, Maleinsäureanhydrid) unter gewissen Voraussetzungen (z.B. Copolymerzusammensetzung) mit PMMA verträglich sind, ist dies für Polystyrol selbst nicht der Fall.
So wird von M.T.Shaw and R.H. Somani für PMMA eine Mischbarkeit von nur 3,4 ppm (PMMA mit einem Molekulargewicht von 160 000) bzw. 7,5 ppm (PMMA mit einem Molekulargewicht von 75 000) mit Polystyrol angegeben (Adv. Chem. Ser. 1984, 206 (Polymer Blends Compos. Multiphase Syst., 33 - 42), CA 101 : 73 417e).
Ebensowenig sind andere Polymethacrylate und Polyacrylate mit Polystyrol zu transparenten Kunststoffen abmischbar. Dies gilt z.B. für Polyethylacrylat, Polybutylacrylat, Polyisobutylmethacrylat, Polyhexylmethacrylat [Vergleiche auch: R.H. Somani and M.T. Shaw. Macromolecules 14, 1549 - 1554 (1981)].

Ähnlich verhalten sich Mischungen aus Poly-α-methylstyrol und Poly(meth)acrylaten. So ist nach W.A. Kruse et al. [Makromol. Chem. 177, 1145 - 1160 (1976)] Polymethylmethacrylat nicht molekulardispers mischbar.

Eigene Versuche ziegen, daß Poly-α-methylstyrol mit Polymethylmethacrylat und Polyethylmethacrylat bei Raumtemperatur Verträglichkeit zeigen. Beim Erwärmen auf ca. 130 Grad C kommt es jedoch zur Entmischung. D.h. diese Polymermischungen zeigen LCST-Verhalten (LCST = Lower Critical Solution Temperature). Eine gewisse, geringe Verträglichkeit wird auch mit Polybutylmethacrylat gefunden. Hier liegt die LCST im untersuchten Mischungsbeispiel bei ca. 80 Grad C. Es deutet sich somit eine mit zunehmender Kettenlänge der Estergruppen geringer werdende Verträglichkeit an, ebenso wie sie auch bei den Polymermischungen: Copolymere aus $\alpha$-Methylstyrol und Acrylnitril/Polymethacrylate beschrieben wurden [vgl. S.H. Goh et al. Polymer Engineering and Science, 22, 34 (1982)].

Aufgabe und Lösung

Mechanische Abmischungen von Polymeren (Polyblends) haben in bestimmten Fällen und auf bestimmten Gebieten der Kunststoffindustrie zu eigenschaftsmäßig verbesserten Kunststoffprodukten geführt. (Vgl. Kirk-Othmer 3rd Ed. Vol. 18, pp 443 - 478 J. Wiley 1982) Die physikalischen Eigenschaften solcher "Polyblends" stellen gewöhnlich einen Kompromiß dar, der unter dem Strich eine Verbesserung gegenüber den Eigenschaften der individuellen Polymeren bedeuten kann. Dabei haben

**multiphasische** Polymermischungen eine ungleich größere kommerzielle Bedeutung erlangt als verträgliche Mischungen (Vgl. Kirk-Othmer loc. cit. pg. 449). Multiphasische und verträgliche Polymermischungen sind somit sowohl hinsichtlich ihrer physikalischen als auch ihrer anwendungstechnisch relevanten, insbesondere ihrer optischen Eigenschaften (Transparenz, Klarheit usw.) streng auseinanderzuhalten. Wie bereits ausgeführt, setzt öfters mangelnde Verträglichkeit dem Ziel, dadurch ein verbessertes Gesamt-Eigenschaftsspektrum zu erriechen, enge Grenzen. Diese schien auch für die beiden Polymerklassen der Polystyrole und der Polyalkyl(meth)acrylate zuzutreffen. [Vgl. W.A. Kruse et al. Makromol. Chem. 177, 1145 (1976) sowie R.H. Somani and M.T. Shaw. Macromolecules 14, 1549 - 54 (1981)]. Es wurde nun gefunden, daß überraschenderweise Mischungen aus Poly-$\alpha$-methylstyrol und Polycyclohexylmethacrylat oder Polycyclohexylacrylat miteinander verträglich sind. Die Verträglichkeit zwischen dem Polycyclohexyl(meth)-acrylat und Poly-$\alpha$-methylstyrol ist dabei so gut, daß die klaren Polymermischungen bis zu ihrem Zersetzungspunkt erwärmt werden können, ohne daß eine Entmischung auftritt.

Die vorliegende Erfindung betrifft daher verträgliche Polymermischungen PM aus zwei verschiedenen Polymerkomponenten

A) 1 - 99,9 Gew.-% eines Poly-$\alpha$-methylstyrols, das zu wenigstens 20 und bis zu 100 Gew.-% aus $\alpha$-Methylstyrol und zu 80 bis 0 Gew.-% aus weiteren mit $\alpha$-Methylstyrol copolymerisierbaren Comonomeren aufgebaut ist, (= Polymer 1), und

B) 99 - 0,1 Gew.-% eines Polymeren, das zu wenigstens 2 und bis zu 100 Gew.-% aus einem Monomeren der Formel I

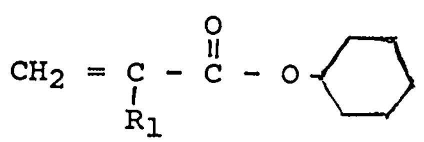

I

worin $R_1$ für Wasserstoff oder Methyl steht, und zu 98 - 0 Gew.-% aus weiteren mit den Monomeren der Formel I copolymerisierbaren Monomeren aufgebaut ist (=Polymer P2) mit der Maßgabe, daß der Anteil on sehr polaren, copolymerisierbaren Monomeren aus der Gruppe bestehend aus Acrylnitril, Maleinsäureimiden, und-anhydrid, p-(2-Hydroxyhexafluoroisopropyl)styrol und Allylalkohol in der Polymerkomponente A) unter Gew.-% liegt.

Die beiden Polymertypen sind infolge ihrer den Charakter bestimmenden Monomerbausteine hinreichend verschieden, so daß aus den Erfahrungen des Standes der Technik Inkompatibilität hätte erwartet werden müssen. Vorzugsweise macht die Summe der Polymerkomponenten A) plus B) einhundert Prozent der gesamten Polymeren in der Mischung PM aus. Gegebenenfalls können aber auch weitere Polymere PW zugesetzt werden, die in den zugesetzten Mengen mit PM verträglich sind.

Nach vorliegenden Befunden ist die Verträglichkeit der aus A) und B) gebildeten Mischungen so gut, daß bei einer Temperatur von 200 Grad C und darüber keine Entmischung eintritt.

Besonders erwähnt seien die Polymermischungen aus Poly-$\alpha$-methylstyrol als Polymerkomponente A) und Polycyclohexylacrylat und/oder Polycyclohexylmethacrylat als Polymerkomponente B) (=Polymermischung PM1). Die ausgezeichnete Verträglichkeit dieser Polymermischung PM1 läßt eine weitgehende Variationsbreite zu, sowohl hinsichtlich des Mischungsverhältnisses als auch der Mischungspartner. So ist es einerseits möglich, die Polymerkomponente B) durch Copolymerisation mit geeigneten Monomeren weitgehend zu variieren.

Andererseits läßt sich auch die Polymerkomponente A) in gewissem Rahmen durch Copolymerisation mit geeigneten Monomeren verändern, ohne daß die Verträglichkeit verloren geht. (Geeignete Comonomere lassen sich z.B. dem Kunststoff-Handbuch, Ed. R. Vieweg & G. Daumiller, Band V, Carl Hanser Verlag,

München, 1969, pp. 104-108, entnehmen).
Geeignete Comonomere für die Komponente B) sind Acryl- bzw. Methyacrylsäureester, im allgemeinen solche von nicht-alicyclischen Alkoholen mit 1 - 12 Kohlenstoffatomen, insbesondere Alkanolen. Daneben Acryl- und Methacrylsäureester von gegebenenfalls substituierten cyclischen Alkoholen mit 4, 5, 7, 8, 9, 10, 11 oder 12 Kohlenstoffatomen im Ring sowie Acryl- und Methacrylsäureester von substituierten Cyclohexanolen, wobei als Substituenten vorzugsweise Alkylreste mit 1 bis 3 Kohlenstoffatomen verstanden seien.

Desweiteren kommen andere mit Cyclohexyl(meth)acrylat copolymerisierbare Monomere als Comonomere in Frage. So z.B. gegebenenfalls substituierte Styrole, in der Regel in Anteilen unter 50 Gew.-% und bevorzugt in Anteilen unter 20 Gew.-%. Besonders genannt als Comonomere für das Polymere B) sind von Cyclohexyl(meth)acrylat verschiedene Ester der (Meth)acrylsäure, insbesondere solche der Formel II

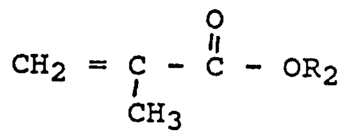

II

worin $R_2$ für Methyl, Ethyl, Propyl und n-Butyl steht, d.h. Methylmethacrylat, Ethylmethacrylat, Propylmethacrylat und n-Butylmethacrylat. Der Anteil dieser Monomeren am Polymer B) beträgt in einer bevorzugten Ausführungsform wenigstens 40 Gew.-%.

Weiter ist bevorzugt, daß der Anteil von Cyclohexylmethacrylat und/oder Cyclohexylacrylat am Polymeren B) wenigstens 5 Gew.-% ausmacht. Besonders bevorzugt ist ein Gehalt der Cyclohexylester von wenigstens 10 Gew.-% oder ganz besonders bevorzugt ein Gehalt von 20 - 80 Gew.-% am Polymer B).
Bevorzugt sind ferner solche Polymermischungen, die zu wenigstens 20 Gew.-% $\alpha$-Methylstyrol und wenigstens 40 Gew.-% an Monomeren der Formel II im Polymer A) enthalten.

Bevorzugt sind solche Polymermischungen PM, die als Polymer A) Copolymere enthalten, die zu wenigstens 1 Gew.-%, in der Regel 2 - 40 Gew.-% oder besser 3 - 20 Gew.-% eines Monomeren der Formel III enthalten.

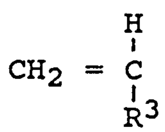

III

worin $R^3$ für einen gegebenenfalls substituierten aromatischen Rest vorzugsweise einen Phenylrest oder für eine Gruppe

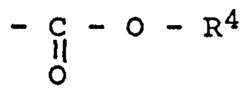

steht, wobei $R^4$ für einen aliphatischen oder aromatischen Kohlenwasserstoffrest mit 1 - 18 Kohlenstoffatomen steht. Als Substituenten für aromatische Reste seien Alkylgruppen mit 1 bis 4 Kohlenstoffatomen, oder - weniger bevorzugt - Halogen wie Chlor genannt.

Insbesondere sind solche Polymermischungen PM zu nennen, die als Polymer-Komponente A zu wenigstens 20 Gew.-% aus $\alpha$-Methylstyrol und zusätzlich zu wenigstens 20 Gew.-% aus einem anderen, von $\alpha$-Methylstyrol verschiedenen, gegebenenfalls substituierten Styrol aufgebaut sind. Als Styrole sind hier u.a. Styrol selbst, p- und m-Alkylstyrole zu nennen, wobei Alkyl vorzugsweise für einen Alkylrest mit 1 - 3 Kohlenstoffatomen steht. Weitere Comonomere für das $\alpha$-Methylstyrol sind Ester der Acrylsäure und der Methacrylsäure. Bevorzugte Menge für Methacrylsäureester sind 10 - 80 Gew.-%, insbesondere 40 - 80 Gew.-% der Methacrylsäureester der Formel II Ferner kann das $\alpha$-Methylstyrol in untergeordneter Menge durch andere Vinylverbindungen, insbesondere Vinylester ersetzt werden. Dabei ist darauf zu achten, daß der $\alpha$-Methylstyrolgehalt an der Polymerkomponente A) wenigstens 20 Gew.-%, bevorzugt jedoch wenigstens 30 Gew.-%, besonders bevorzugt wenigstens 40 Gew.-% und ganz besonders bevorzugt wenigstens 55 Gew.-% ausmacht.

Während die Polymerkomponente A) mit anderen hydrophoben Vinylverbindungen also weitestgehend modifiziert werden kann, ist der Anteil an sehr polaren Monomeren, wie z.B. Acrylnitril, Maleinsäureanhydrid, Maleinsäureimiden, p-(2-Hydroxyhexafluorosiopropyl)styrol oder Allylalkohol sehr begrenzt. Der Anteil dieser polaren Monomeren sollte unter 10 Gew.-%, besser unter 5 Gew.-% an der Polystyrolkomponente A) betragen. Besonders bevorzugt sind solche Polymere A), die weniger als 0,1 Gew.-% dieser polaren Monomere enthalten.

Die Variationen werden sich dabei in aller Regel nach den Erfordernissen des jeweiligen Einsatzgebietes richten. So wird der Cyclohexylacrylat- und/oder der Cyclohexylmethacrylatgehalt eines Polymeren B) das in hohen Gewichtsanteilen beispielsweise zur Modifizierung des Brechungsindex von reinem Poly-α-Methylstyrol eingesetzt werden soll, höher sein, in der Regel deutlich größer als 20 Gew.-% oder bevorzugt deutlich größer als 30 Gew.-%, als der Cyclohexyl(meth)acrylatgehalt eines Polymeren B) das mit Polymer A) beispielsweise nur bei Raumtemperatur verträglich sein soll, bei erhöhter Temperatur jedoch wieder Phasentrennung (also Unverträglichkeit) aufweisen soll.

In der Regel ist eine Verträglichkeit der Polymeren A) mit den Polymeren B) auch dann noch gegeben, wenn auch das Polymere A) Cyclohexyl(methy)acrylat und/oder das Polymere B) auch α-Methylstyrol enthält. Dabei ist der α-Methylstyrolgehalt des Polymeren A) jedoch deutlich höher als der α-Methylstyrolgehalt des Polymeren B). In der Regel ist die Differenz des α-Methyl-styrolgehalts (Gew.-% α-Methylstyrol in Polymer A minus Gew.-% α-Methylstyrolin Polymer B) größer als 10 Gew.-%, bevorzugt größer als 20 Gew.-%, besonders bevorzugt größer als 30 Gew.-% und ganz besonders bevorzugt größer als 50 Gew.-%. Ebenso ist der Cyclohexyl(meth)acrylatgehalt der Polymeren B) deutlich höher als der Cyclohexyl(meth)-acrylatgehalt des Polymeren A). So enthält Polymere A) in der Regel weniger als 2 Gew.-% Cyclohexyl-(meth)acrylat, bevorzugt weniger als < 0,1 Gew.-%. Für den Fall, daß auch Polymer A) Cyclohexyl(meth)-acrylat enthält, gilt, daß der Quotient (Gehalt an Cyclohexyl(meth)acrylat in Polymer B/Gehalt an Cyclohexl-(meth)acrylat in Polymer A) > 2, bevorzugt > 5 und ganz besonders bevorzugt > 10 ist.

Ferner gilt, daß der Gehalt an Monomeren der Formel I im Polymer B) und der Gehalt an α-Methylstyrol im Polymeren B) vor allem dann gering sein kann, wenn die übrigen Monomerbausteine im Polymer A) und im Polymer B) chemisch weitgehend übereinstimmen.

Die **Charakterisierung** der erfindungsgemäßen Polymermischungen PM als **verträgliche** Mischungen erfolgt nach den anerkannten Kriterien (Vgl. Kirk-Othmer, loc.cit, Vol. 18, pp 457 - 460)

a) Bei Anwendung optischer Verfahren beobachtet man bei den erfindungsgemäßen Polymermischungen PM einen **einzigen Brechungsindex,** der Zwischen denen der beiden Polymerkomponenten A) und B) liegt.

b) Die Polymermischungen PM besitzen eine einzige Glasübergangstemperatur Tg (die zwischen der der Polymerkomponenten liegt).

Herstellung der Polymerisate A) und B)

Die Herstellung der Polymerisate A) und B) kann nach den bekannten Regeln der Polymerisation und nach bekannten Verfahren erfolgen. Die Polymeren von Typ A) können z.B: nach Houben-Weyl, Methoden der Organischen Chemie, 4. Auflage, Bd. XIV/1, Georg Thieme-Verlag (1961) hergestellt werden. Sie sind auch in geeigneter Form im Handel erhältlich. Dabei kann vorzugsweise das radikalische, aber auch ionische Polymerisationsverfahren zur Anwendung kommen. Die Molgewichte M der erfindungsgemäß eingesetzten Polymeren A) liegen in der Regel oberhalb von 3 000, bevorzugt im Bereich 5 000 - 1000 000, besonders bevorzugt im Bereich 20 000 - 500 000. (Bestimmung durch Lichtstreuung).

Es sei indessen betont, daß die Molgewichte die Eignung als Komponente in den unverträglichen Polymermischungen PM nicht kritisch zu beeinflussen scheinen. Dies gilt sowohl für die Homo- als die Copolymerisate der Typen A) und B). Für die gute Verträglichkeit von Polymer A) und Polymer B) ist die Taktizität der Polymeren von gewisser Bedeutung. In der Regel ist insbesondere ein Polymer B) mit einem geringen Anteil an isotaktischen Triaden (wie es beispielsweise durch radikalische Polymerisation erhalten wird) gegenüber Polymeren mit einem hohen isotaktischen Anteil, wie es durch spezielle ionische Polymerisation erzeugt wird, bevorzugt.

Die Herstellung der Homo- bzw. Copolymerisate B) erfolgt nach bekannten Verfahren. Wenn auch prinzipiell eine Herstellung durch anionische Polymerisation oder Group.-Transfer-Polymerisation (Siehe auch O.W. Webster et al., J. Am. Chem. Soc. 105, 5706 (1983) möglich ist, so ist doch die bevorzugte Herstellungsform die radikalische Polymerisation.

Die Molgewichte M der Polymerisate B liegen in der Regel oberhalb von 3 000 im allgemeinen Bereich von 10 000 bis 1 000 000, vorzugsweise 20 000 bis 300 000. Bei der Auswahl der Monomerkomponenten die als Comonomere bei B) eingesetzt werden sollen, ist darauf zu achten, daß die Glastemperatur Tg des resultierenden Polymerisats die technische Anwendbarkeit des Gesamtysystems PM nicht einschränkend beeinflußt.

So soll für eine Herstellung von Formkörpern aus der Polymermischung PM wenigstens eines der Polymeren A) und B) eine Glastemperatur TG > 90 Grad C aufweisen, bevorzugt ist für diese Anwendung, daß die Polymermischung PM eine Glastemperatur Tg > 90 Grad C aufweist. Diese Einschränkung gilt bevorzugt für die Herstellung von spritzgegossenen, gepreßten bzw. extrudierten Gegenständen aus der Polymermischung PM.
Bevorzugt sind aus der Polymermischung hergestellte Formkörper, die eine Vicaterweichungstemperatur von > 115 Grad C, besonders bevorzugt > 125 Grad C und ganz besonders bevorzugt > 135 Grad C aufweisen.
Besonders im Hinblick auf eine gute Verarbeitbarkeit ist es in der Regel erforderlich, daß die Polymermischung PM eine gute Thermostabilität besitzt, dadurch gekennzeichnet, daß der $T_D$-Wert > 260 Grad C oder bevorzugt > 280 Grad C liegt. Als $T_D$-Wert ist dabei diejenige Temperatur angesprochen, bei der die Polymer-Probe bei einer Aufheizrate von 5 Grad C/min im Vakuum 2 % Gewichtsverlust erleidet. Für andere Anwendungsgebiete, beispielswiese für Lacke, für Elastomere oder für eine reversible thermotrope Verglasung (Polymermischung mit Trübungspunkt beim Erwärmen), also für eine Anwendung gemäß DE-A 34 36 477.3 sind jedoch solche Polymermischung PM bevorzugt, die eine Polymerkomponente B) mit einer Glastemperatur Tg < 40 Grad C oder bevorzugt < 20 Grad C aufweisen. Das bevorzugte Anwendungsgebiet dieser Poly-$\alpha$-methylstyrol enthaltenden Polymermischung ist jedoch im Bereich von Kunststoffen mit hoher Wärmeformbeständigkeit zu sehen.

Herstellung der Mischungen PM

Die Verträglichen Mischungen PM können durch unterschiedliche Verfahren hergestellt werden, z.B. werden sie durch intensive mechanisches Vermischen der Komponenten A) und B) in der Schmelze oder im Extruder erzeugt; oder sie können auch aus einem gemeinsamen Lösungsmittel heraus als sogenannte "solution cast polyblends" hergestellt werden. (Vgl. Kirk-Othmer, "Encyclopedia of Chemical Technology" 3rd. Ed. Vol. 18, pg. 443 - 478, J. Wiley, 1982). Auch kann so vorgegangen werden, daß Polymer A) in der Monomerenmischung des anderen Polymeren B) aufgelöst wird und anschließend Polymer B) in Gegenwart von Polymer A) erzeugt wird. Umgekehrt kann natürlich auch Polymer A) in Gegenwart des Polymer B) erzeugt werden. Ebenso kann die Polymermischung PM aus gemeinsamen Fällungsmitteln erzeugt werden. Der Mischungsart sind keine Grenzen gesetzt. Die verträglichen Mischungen PM können gegebenenfalls noch weitere an sich übliche Zusätze wie Weichmacher, Gleitmittel, Stabilisatoren enthalten, soweit sie die Mischbarkeit der Komponenten bzw. den einphasischen Charakter der Mischungen nicht beeinträchtigen, Im allgemeinen liegt ihr Anteil an den Mischungen PM unter 20 Gew.-%, bevorzugt unter 3 Gew.-%. Vorzugsweise kann dabei wie folgt vorgegangen werden.:
Man erzeugt in der Regel zunächst Mischungen der Komponenten A) und B) wobei vorteilhafterweise von Feststoffen in Form beispielsweise eines Perlpolymerisats oder eines Granulats ausgegangen wird unter Verwendung langsam laufender Mischaggregate wie z.B. Trommel-, Röhnrad-, Doppelkammer-Pflugscharmischern. Die langsam laufenden Mischaggregate verursachen ein mechanisches Mischen, ohne daß die Phasengrenzen aufgehoben werden. (Vgl. Ullmann's Encyklopädie der Technischen Chemie, 4. Auflage, Bd. 2, pg. 282 - 311, Verlag Chemie).
Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextruder oder gegebenenfalls in Extrudern mit oszillierender Schnecke und Scherstiften (z.B: im® BUSSCO-Kneter). Man kann nach diesen Verfahren Gleichkorngranulate (z.B. Heißabschlag, Würfelform, Rundkorn) herstellen. Die Korngröße der Granulate liegt dabei im Berich von 2 bis 5 mm. Eine weitere, einfache Methode zur Erzeugung der Polymermischungen PM ist das Abmischen von Polymedispersionen (enthaltend Polymerkomponente A) und Polymerdispersion, enthaltend die Polymerkomponente B). Diese Dispersionsabmischungen können koaguliert werden, gemeinsam sprühgetrocknet werden oder gemeinsam auf einem Extruder abgequetscht werden.
Die Herstellung der jeweiligen Polymerdispersionen ist an sich bekannt (vgl. Houben-Weyl loc.cit.)

Vorteilhafte Wirkungen der Mischungen PM

Die erfindungsgemäßen verträglichen Polymermischungen PM weisen insbesondere die nachfolgenden Vorteile auf, die die entsprechenden technischen Einsatzmöglichkeiten nahelegen, wobei "Poly-$\alpha$-methylstyrol" bzw. "Polycyclohexyl(meth)acrylat" jeweils stellvertretend für die unter die Polymeren A) bzw. B) fallenden Möglichkeiten aufgeführt sei.

1) Zunächst sind die Polymermischungen - im Unterschied zu Mischungen aus anderen Poly(meth)-acrylaten und Poly-α-methylstyrol - verträglich. D.h. die erfindungsgemäßen Polymermischungen sind im nicht pigmentierten Zustand im Unterschied zu nicht verträglichen Poly-α-methylstyrol/ Poly(meth)-acrylatabmischungenglasklar (sie zeigen keine Lichtstreuung, d.h. in der Regel ist der Haze < 10 %). Erfindungsgemäß sind aber auch solche Mischungen, die nur bei Raumtemperatur verträglich sind, bei Temperaturerhöhung jedoch Entmischung zeigen. (LCST-Verhalten).

2) Mischungen aus Poly-α-methylstyrolen und Polycyclohexyl(meth)acrylaten zeigen wie Poly-α-methylstyrole und Polycyclohexylacrylate bzw. α-Methacrylate selbst eine geringe Wasseraufnahme.

3) Durch Abmischen mit Polycyclohexyl(meth)acrylat läßt sich die Doppelbrechung des Poly-α-methylstyrols reduzieren.

4) Durch Abmischen mit Polycyclohexyl(meth)acrylat kann auch der Brechungsindex des Poly-α-methylstyrols reduziert werden.

Beispielsweise kann Poly-α-methylstyrol durch Abmischen mit Polycyclohexyl(meth)acrylat im Brechungsindex so verändert werden, daß der Brechungsindex der Poly-α-methylstyrol/Polycyclohexyl-(meth)-acrylatmischung dem Brechungsindex einer eingelagerten Gummiphase angepasst wird. Auf diesem Weg kann man transparente, schlaghähe Kunststoffe erhalten. Das Mischungsverhältnis der Polymeren A) zu der Polymeren B) kann in der Regel aufgrund der außerordentlich guten Verträglichkeit der beiden Polymeren ziemlich frei gewählt werden.

Während beispielsweise zur Brechungsindexangleichung relativ große Mengen im Polymer A) oder Polymer B) eingesetzt werden, ist dies für andere Anwendungen nicht nötig. In der Regel besteht die Polymermischung aus 1 - 99,9 Gew.-% Polymer A) und 99 - 0,1 Gew.-% Polymer B); bevorzugt sind solche Polymermischungen PM die 10 - 99 Gew.-% Polymer A) und entsprechend 90 - 1 Gew.-% Polymer B) enthalten, besonders bevorzugt sind solche Mischungen PM, die 40 bis 95 Gew.-% Polymer A) und 60 - 5 Gew.-% Polymer B) enthalten, ganz besonders bevorzugt schließlich ist das Mischungsverhältnis 60 -90 Gew.-% Polymer A) und 40 - 10 Gew.-% Polymer B).

5) Besonders Interesse finden auch Polymerkompositionen, die zu ca. 40 - 99 Gew.-%, bevorzugt 70 - 95 Gew.-%, aus der Polymermischung PM und zu 60 - 1 Gew.-%, bevorzugt 30 - 5 Gew.-% aus einem weiteren von A) und B) chemisch unterscheidbaren Polymeren P3 bestehen, wobei gilt, daß Polymer P3 mit Polymer A), B) und mit der Mischung PM unverträglich ist.

In der Regel wird dabei die Zusammensetzung der Polymermischung PM so gewählt, daß der Brechungsindex des Polymeren P3 mit dem Brechungsindex der Mischung PM übereinstimmt, in der Regel soll also bei Raumtemperatur gelten:

$$| n_D^{25}{}_{PM} - n_D^{25}{}_{P3} | < 0,01$$

In der Regel wird das mit PM unverträgliche Polymere P3 eine Tg < 20 Grad C aufweisen und wenigstens teilweise mit wenigstens einem der Bestandteile der Polymermischung PM, also mit A) oder B), kovalent verknüpft sein. Darüber hinaus kann das Polymere P3 vernetzt sein.

Ganz besonders bevorzugt ist der Fall, daß das Polymere P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

6) Durch Umhüllen von Poly-α-methylstyrol mit Polycyclohexyl(meth)acrylat ist die Herstellung einer optischen Gradientenfaser möglich:

Dabei erhält man folgende Daten:

Kern : Poly-α-methylstyrol Brechungsindex $n_D$ = 1,61

Mantel : Polycyclohexyl(meth)acrylat $n_D$ = 1,51

In der Regel wird man als Mantel -schon wegen der hohen Sprödigkeit vom Polycyclohexylmethacrylat Cyclohexyl-(meth)acrylat-haltige Copolymere (z.B. mit MMA) verwenden, wodurch der Brechungsindex des Mantels noch niedriger wird.

Übergang: Kontinuierlich. Diese Zone entspricht einer Polymermischung PM. Der Kern gehorcht der Definition von A), der Mantel entspricht der Definition von B).

Derartige Fasern können z.B. als Lichtleitkabel Verwendung finden.

7) Gegenstände aus Poly-α-methylstyrol mit einem dünnen Mantel aus Polycyclohexyl(meth)acrylat, insbesondere aus einem Polycyclohexyl(meth)acrylat mit (einpolymerisiertem) UV-Absorber sind zugänglich. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel

werden die Gegenstände aus Poly-α-methylstyrol bzw. aus der Polymermischung PM durch Spritzen, Pressen, Extrudieren, Walzen oder Gießen hergestellt. Der Mantel aus Polymer B) wird in der Regel durch Lackieren oder durch Coextrudieren aufgebracht. Hier ist insbesondere an solche Gegenstände zu denken, die eine hohe Wärmeformbeständigkeit verbunden mit einer guten Witterungsbeständigkeit erfordern, z.B. Scheinwerferstreuscheiben. Derartige Objekte sind im Sinne der vorliegenden Erfindung zu betrachten als Festkörper mit einer Polymer-Konfiguration, aufgebaut aus einer Schicht aus Polymer P1, einer zweiten Schicht aus Polymer P2 und einer Zwischenschicht aus einer verträglichen Polymermischung PM bestehend aus

A) bis 99,9 Gew.-% eines Polymeren A), das zu 20 bis 100 Gew.-% α-Metylstyrol und zu 80 bis 0 Gew.-% aus α-Methylstyrol copolymerisierbaren Monomeren, und

B) 99,9 bis 0,1 Gew.-% eines Polymeren B), das zu 10 bis 100 Gew.-% aus Monomeren der Formel I und zu 90 bis 0 Gew.-% aus mit Monomeren der Formel I copolymerisierbaren Monomeren aufgebaut ist.

Ähnlich sind Objekte aus Abfallmaterial oder mit einem Gehalt an Abfallmaterial zu betrachten, etwa wenn Abfallmaterial PM in eine Polymer A) eingebaut wird. Sie gehorchen der Definition, derzufolge eine verträgliche Polymermischung PM als Schicht abgedeckt wird von einer Deckschicht aus dem zweiten Polymer. In all den vorgenannten Objekten soll die Deckschicht vorzugsweise 0,1 bis 20 Gew.-% (bezogen auf die Deckschicht) mindestens eines UV-Absorbers in zweckmäßiger Verteilung enthalten. Brauchbare UV-Absorber werden z.B. in Kirk-Othmer, Encyclopedia of Chemical Technologie, 3rd Ed. Vol. 23, pp. 615-627, J.Wiley, 1983; R. Gächter u. H. Müller, Taschenbuch der Kunststoff-Additive, Carl Hanser Verlag, 1979, Seiten 90-143; Ullmanns Encyklopädie der Techn.Chemie, 4. Auflage, Bd. Seiten 256-260, Verlag Chemie, 1978, US-A 4 576 170, angegeben.

8) Platten aus Poly-α-methylstyrol mit einem Überzug aus Polycyclohexyl(meth)acrylat lassen sich herstellen. Platten mit einem derartigen Aufbau weisen gegenüber unbehandelten Poly-α-methylstyrolplatten eine um ca 2% verbesserte Lichtdurchlässigkeit auf. In der Regel weisen Platten mit einem Überzug aus Polycyclohexyl(meth)acrylat auch eine bessere Kratzfestigkeit und eine veränderte Korrosionsbeständigkeit auf.

9) Verarbeitungstechnische Vorteile resultieren bei Anwendung von Mischungen PM aus > 90 Gew.-% Poly-α-methylstyrol und < 10 Gew.-% Polycyclohexyl(meth)acrylat. In diesem Falle übernimmt das Poly-(methyl)acrylat die Funktionen eines Verarbeitungshilfsmittels für das thermisch häufig empfindliche Poly-α-methylstyrol.

10) Besonderes Interesse gilt auch solchen Polymermischungen PM, die dadurch gekennzeichnet sind, daß Polymer A) und Polymer B) relativ ähnlich sind, wobei allerdings Polymer B) einen bestimmten Anteil z.B. 2 -10 Gew.-% an Cyclohexylacrylat enthält und Polymer A) einen deutlich, d.h. in der Regel um wenigstens 2 Gew.-% geringeren Anteil an Cyclohexylacrylat. Solche Polymermischungen lassen sich einfach durch Batchpolymerisation von beispielsweise α-Methylstyrol, Methylmethacrylat und Cyclohexylacrylat-haltigen Monomermischungen herstellen. Aufgrund der unterschiedlichen Copolymerisationsparameter reichert sich dabei bei der Endpolymerisation eine Cyclohexylacrylat-reiche Monomermischung an, die aber nicht wie im Falle von Methylacrylat-reichen Polymeren zur Unverträglichkeit mit dem α-Methylstyrol-reichen Polymer A) führt, sondern zu verträglichen, klaren Produkten (siehe Beispiele).

11) Weiter können Verklebungen von Poly-α-methylstyrol mit dem Polymer B) oder vorteilhaft mit Cyclohexylacrylat enthaltenen Monomer/Initiator-Mischungen durchgeführt werden. Hier kann die hohe Polymerisationsgeschwindigkeit der Acrylate mit der guten Poly-α-methylstyrolverträglichkeit kombiniert werden.

Die nachfolgenden Beispiele sollen die Erfindung erläutern und insbesondere aufzeigen, wie man mit Hilfe der verträglichen Polymermischungen PM zu Produkten mit verbesserter Witterungsbeständigkeit, besserer Optik und besserer Verarbeitungsstabilität gelangt.

Die Bestimmung der VICAT-Erweichungstemperatur erfolgt nach DIN 53460.

Die Bestimmung der reduz. Viskosität ($\eta spec/_c$) in Anlehnung an DIN 1342, DIN 51562 und DIN 7745.

Die Bestimmung der Lichtdurchlässigkeit kann - sofern nicht anders vermerkt - nach DIN 5036 vorgenommen werden.

Die Trübung (haze) wird in % (ASTM D 1003) angegeben.

## BEISPIELE

### Beispiel 1

Verträgliche Polymermischungen PM aus Poly-α-methylstyrol = Polymer A) und Polycyclohexylmethacrylat = Polymer B). Herstellung von verträglichen Polymerfilmen aus organischer Lösung.

Poly-α-methylstyrol (M.W. 50 000, Lieferant: Aldrich-Chemie GmbH, D-7924 Steinheim) wird in Toluol zu 20 Gew.-% gelöst.
Ebenso wird aus Polycyclohexylmethacrylat ($\eta_{spec/c}$ = 29 ml/g) eine 20 %ige Lösung in Toluol hergestellt. Die Lösungen werden in den in Tabelle 1 angegebenen Mischungsverhältnissen gemischt. Es werden aus diesen Mischungen Filme ausgegossen, im Vakuum getrocknet und anschließend visuell beurteilt.
Alle Abmischungen ergeben klare, farblose Filme. (Siehe auch Tabelle 1)

Tabelle 1

| Visuelle Beobachtung von Poly-α-methylstyrol/Polycyclohexylmethacrylat-Abmischungen | | | |
|---|---|---|---|
| Versuch Nr. | Gew.-% Poly- -methylstyrol im Film | Gew.-% Polycyclohexylmethacrylat | Optische Beurteilung des getrockneten Films |
| 1a | 98 | 2 | + |
| 1b | 95 | 5 | + |
| 1c | 90 | 10 | + |
| 1d | 80 | 20 | + |
| 1e | 70 | 30 | + |
| 1f | 60 | 40 | + |
| 1g | 50 | 50 | + |
| 1h | 40 | 60 | + |
| 1i | 30 | 70 | + |
| 1j | 20 | 80 | + |
| 1k | 10 | 90 | + |
| 1l | 5 | 95 | + |
| 1m | 2 | 98 | + |
| (+ = homogen, glasklar) | | | |

Beispiel 2

Verträgliche Polymermischungen PM aus Poly-α-methylstyrol (= Polymer A)) und Polycyclohexylacrylat (= Polymer B)).

Poly-α-methylstyrol (gemäß Beispiel 1) wird mit Polycyclohexylacrylat ($\eta_{spec/c}$ = 23 ml/g) gemäß Beispiel 1 gemischt. Ergebnis: alle Mischungen PM von 98/2 bis 2/98 sind völlig verträglich.

Beispiel 3

Überprüfung der Verträglichkeit bei erhöhter Temperatur.

Ausgewählte Proben der in den Beispielen 1 - 2 enthaltener verträglichen Polymermischungen (20/80, 50/50, 80/20) werden auf einer Heizbank erwärmt. Ergebnis: Die Polymermischungen sind bis zur Zersetzungstemperatur des Poly-α-methylstyrols verträglich. Eine Entmischung wird nicht beobachtet.

Beispiele 4 - 6 (Vergleich beispiele)

Partielle Verträglichkeit von Poly-α-methylstyrol mit Polymeren, aufgebaut aus Monomeren der Formel II.

Beispiel 4

Polymethylmethacrylat wird wie in Beispiel 1 beschrieben in Toluol gelöst und mit einer 20 %igen Lösung von Poly-α-methylstyrol (M.W. 50 000) im Verhältnis 1/1 gemischt. Man enthält einen klaren Polymerfilm. Beim Erwärmen des Films auf ca. 120 Grad C findet Entmischung statt.

Beispiel 5

Polyethylmethacrylat wird wie in Beispiel 4 mit Poly-α-methylstyrol gemischt. Man erhält einen klaren Polymerfilm, der beim Erwärmen auf ca. 120 Grad C weiß wird.

Beispiel 6

Polybutylmethacrylat wird wie in Beispiel 4 mit Poly-α-methylstyrol gemischt. Man erhält einen klaren Polymerfilm, der beim Erwärmen auf ca. 100 Grad C weiß wird.

Beispiel 7

Poly-α-methylstyrol (M.W. 50 000) wird mit einem Copolymeren aus 60 Gew.-% Methylmethacrylat und 40 Gew.-% Cyclohexylmethacrylat wie in Beispiel 1 im Verhältnis 1/1 gemischt. Man erhält einen klaren Polymerfilm, der beim Erwärmen bis zum Zersetzungspunkt keine Entmischung zeigt.

Beispiel 8

Herstellung einer hochwärmeformbeständigen Formmasse mit guter Transparenz. In situ Erzeugung einer verträglichen Polymermischung durch Einsatz von Monomeren mit sehr unterschiedlichen Copolymerisationsparametern, speziell Erzeugung eines α-Methylstyrol reichen Polymeren (= Polymer A)) in der Anfangsphase der Polymerisation und eines an Cyclohexylacrylat reichen Polymeren (= Polymer B) in der Endphase der Polymerisation.

Experimentelle Durchführung:

In einem 41-Planschliffreaktor werden unter Schutzgas (Argon) vorgelegt:
2 000 g destilliertes Wasser
5 g Natriumsalz einer Mischung aus Tetradecan- und Hexadecansulfonsäure
0,004 g $FeSO_4$
Dazu emulgiert man:
1 188 g Methylmethacrylat
540 g α-Methylstyrol
72 g Cyclohexylacrylat
11 g 2-Ethylhexylthioglykolat.

Man startet die Reaktion mit 0,45 Kaliumperoxodisulfat und 0,18 g Natriumbisulfit und polymerisiert bei 80 Grad C., Die Initiatorzugabe wird nach Bedarf wiederholt. Ebenso kann zur Stabilisierung der Dispersion weiterer Emulgator zugesetzt werden. Reaktionsdauer: ca. 10 h bei 80 Grad C, danach langsames Abkühlen auf Raumtemperatur.
Der Polymerisatfeststoff wird durch Gefrierkoagulation und nachfolgenden Absaugen und Waschen mit destilliertem Wasser gewonnen.
Man erhält eine Formmasse, aus der eine glasklare Platte gespritzt wird.

| | |
|---|---|
| Vicat-Erweichungstemperatur | 136 Grad C |
| Haze | 1,8 % |
| Thermostabilität | $T_D$ = 295 Grad C |

Beispiel 9 (Vergleichsbeispiel)

Man Verfährt wie in Beispiel 8, wählt jedoch eine andere Massenzusammensetzung:

| | |
|---|---|
| 1 188 g | Methylmethacrylat |
| 540 g | α-Methylstyrol |
| 72 g | Methylacrylat |
| 11 g | 2-Ethylhexylthioglykolat |

Bei gleicher Verfahrensweise wie in Beispiel 8 resultiert eine trübe Formmasse (Haze > 12 %), die auch

hinsichtlich der Vicaterweichungstemperatur der Polymermischung gemäß Beispiel 8 deutlich unterlegen ist.

Beispiel 10

Aus der klaren hochwärmeformbeständigen Formmasse gemäß Beispiel 8 wird eine 3 mm dicke Platte extrudiert. Auf diese Platte wird eine 10 um dicke Schicht aus einem Copolymeren (= Polymer B)) der Zusammensetzung 60 % Methylmethacrylat, 35 % Cyclohexylmethacrylat, 5 % Methylacrylat unter Zusatz von 0,05 % 2-Hydroxy-4-octoxybenzophenon als UV-Absorber lackiert.

Es resultiert eine klare Platte, die gegenüber der nicht lackierten Platte eine ca. 1 % höhere Lichtdurchlässigkeit aufweist. Die Platte zeigt verbesserte Witterungsbeständigkeit.

Beispiel 11

Wiedereinarbeitung von Abfällen

Formmasse gemäß Beispiel 8 wird zu 20 Gew.-% mit gemahlenen Plattenabfällen der beschichteten Plattenabschnitte gemäß 10 gemischt. Diese Mischung wird zu 3 mm dicken, klaren Platten extrudiert. Die Platten werden wie in Beispiel 10 beschrieben lackiert. Die Eigenschaften der so erhaltenen Platten entsprechen denen der gemäß Beispiel 10 erhaltenen Platte.

Folgerungen

Die Beispiele belegen die außerordentlich gute Verträglichkeit von Poly-$\alpha$-methylstyrol mit Polycyclohexyl(meth)acrylat. Die gute Verträglichkeit ermöglicht es, nicht nur verträgliche Mischungen aus renem Poly-$\alpha$-methylstyrol und seinem Polycyclohexyl(meth)acrylat herzustellen, sondern auch verträgliche Mischungen aus modifizierten Poly-$\alpha$-methylstyrol und anderen Polymeren (insbesondere Poly(meth)-acrylaten), die nur geringfügig mit Cyclohexyl(meth)acrylat modifiziert sind.

Dies ist um so wichtiger als reines Polycylohexyl(meth)acrylat keine guten mechanischen Eigenschaften aufweist. Schon aus Kostengründen wird man den Cyclohexyl(meth)acrylatgehalt des Polymeren B) möglichst gering halten. Dies ergibt sich schon dadurch, daß eines der interessantesten erfindungsgemäßen Anwendungsgebiete nämlich der Oberflächenschutz von Polystyrol beispielsweise durch Lackieren mit Polymer B) sein wird.

Gerade hier sind minimale Polymermengen B), beispielsweise 0,5 Gew.-% bezogen auf Polymer A) ausreichend, so daß bei der Wiedereinarbeitung nur sehr geringe Mengen von Polymer A) eingearbeitet werden müssen.

In der Regel wird man auch als Polymer A) nicht reines Poly-$\alpha$-methylstyrol einsetzen, da dies im allgemeinen ohne Copolymerisation mit anderen Monomeren nicht thermostabil ist.

So ist neben dem Witterungsschutz von Polymer A) durch Polymer B) vor allem der Einsatz von Polymer B) als Verarbeitungshilfsmittel für Polymer A) von Interesse.

**Patentansprüche**

**1.** Verträgliche Polymermischung PM aus zwei Polymerkomponenten

A) 1 - 99,9 Gew.-% eines Polymeren A), das zu wenigstens 20 und bis zu 100 Gew.-% aus dem Monomeren $\alpha$-Methylstyrol und zu 80 bis 0 Gew.-% aus weiteren, mit $\alpha$-Methylstyrol copolymerisierbaren Monomeren aufgebaut ist, und

B) 99 - 0,1 Gew.- % eines Polymeren B), das zu wenigstens 2 und bis zu 100 Gew.-% aus einem Monomeren der Formel I

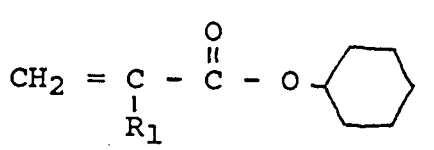 ,   I

worin $R_1$ für Wasserstoff oder Methyl steht, und zu 98 bis 0 Gew.-% aus weiteren, mit den Monomeren der Formel I copolymerisierbaren Monomeren, aufgebaut ist mit der Maßgabe, daß der

Anteil an sehr polaren, copolymerisierbaren Monomeren aus der Gruppe bestehend aus Acrylnitril, Maleinsäureimiden und -anhydrid, p-(2-Hydroxyhexafluoroisopropyl)styrol und Allylalkohol in der Polymerkomponente A) unter 10 Gew.-% liegt.

**2.** Verträgliche Polymermischung PM gemäß Anspruch 1, dadurch gekennzeichnet, daß Polymer B) zu wenigstens 2 Gew.-% aus einem Monomeren der Formel I und zu wenigstens 40 Gew.-% aus Monomeren der Formel II

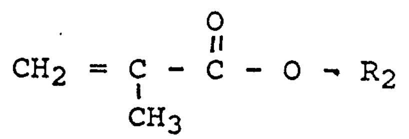

, II

worin $R_2$ für Methyl, Ethyl, Propyl und n-Butyl steht, aufgebaut ist.

**3.** Verträgliche Polymermischung PM gemäß den Ansprüchen 1 und 2, dadurch gekennzeichnet, daß das Polymere B) zu wenigstens 5 Gew.-% aus Monomeren der Formel I aufgebaut ist.

**4.** Verträgliche Polymermischung PM gemäß den Ansprüchen 1 - 3, dadurch gekennzeichnet, daß das Polymere B) zu wenigstens 10 Gew.-% aus Monomeren der Formel I aufgebaut ist.

**5.** Verträgliche Polymermischung PM gemäß den Ansprüchen 1 - 4, dadurch gekennzeichnet, daß das Polymere A) zu wenigstens 20 Gew.-% aus $\alpha$-Methylstyrol und zu wenigstens 40 Gew.-% aus Monomeren der Formel II aufgebaut ist.

**6.** Verträgliche Polymermischung PM gemäß den Ansprüchen 1 - 4, dadurch gekennzeichnet, daß das Polymere A) zu wenigstens 20 Gew.-% aus $\alpha$-Methylstyrol und zu wenigstens 20 Gew.-% aus einem anderen, von $\alpha$-Methylstyrol unterscheidbaren Styrol oder Styrolderivat aufgebaut ist.

**7.** Verträgliche Polymermischung PM gemäß den Ansprüchen 1 - 6, dadurch gekennzeichnet, daß die aus der Polymermischung hergestellten Formkörper eine Vicat-Erweichungstemperatur (nach DIN 53460) von > 115 Grad C aufweisen.

**8.** Verträgliche Polymermischung PM gemäß den Ansprüchen 1 - 7, dadurch gekennzeichnet, daß die aus der Polymermischung PM hergestellten Formkörper eine Vicat-Erweichungstemperatur (nach DIN 53460) von > 125 Grad C aufweisen

**9.** Verträgliche Polymermischung PM gemäß den Ansprüchen 1 - 8, dadurch gekennzeichnet, daß die Polymermischung eine gute Thermostabilität besitzt, dadurch gekennzeichnet, daß der TD-Wert > 260 Grad C liegt, wobei der TD-Wert die jenige Temperatur bezeichnet, bei der die Polymerprobe bei einer Aufheizrate von 5 °C/min im Vakuum 2% Gewichtsverlust erleidet.

**10.** Verträgliche Polymermischung PM gemäß den Ansprüchen 1 - 9, dadurch gekennzeichnet, daß die Polymermischung im nicht pigmentierten Zustand eine Haze von < 10 % (nach ASTM D1003) aufweist.

**11.** Verträgliche Polymermischung PM gemäß den Ansprüchen 1 - 10, dadurch gekennzeichnet, daß wenigstens eines der Polymere der Mischung ein Molekulargewicht > 3 000 aufweist.

**12.** Polymerkomposition aus 40 - 99 Gew.-% der verträglichen Polymermischung gemäß den Ansprüchen 1 - 11 und 60 - 1 Gew.-% eines Polymeren P3, das mit A), B) und PM nicht verträglich ist.

**13.** Polymerkompositionen gemäß Anspruch 12, dadurch gekennzeichnet, daß das Polymere P3 eine Glastemperatur von < 20 Grad C aufweist und wenigstens teilweise mit Polymer A) oder Polymer B) kovalent verbunden ist.

**14.** Gegenstand aus der Polymermischung PM gemäß den Ansprüchen 1 - 13, mit einem Mantel aus Polymer B).

**Claims**

**1.** Compatible polymer mixture PM consisting of two polymer components

A) 1 - 99.9 wt.-% of a polymer A) which is made up of at least 20 and up to 100 wt.-% of the monomer $\alpha$-methylstyrene and 80 to 0 wt.-% of other monomers which are copolymerisable with $\alpha$-methylstyrene, and

B) 99 - 0.1 wt.-% of a polymer B) which is made up of at least 2 and up to 100 wt.-% of a monomer of formula I

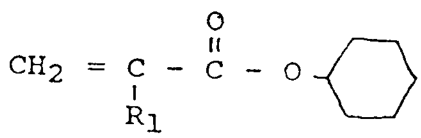

I

wherein $R_1$ represents hydrogen or methyl, and 98 to 0 wt.-% of other monomers which are copolymerisable with the monomers of formula I, with the proviso that the proportion of highly polar, copolymerisable monomers selected from the group consisting of acrylonitrile, maleic acid imides and anhydride, p-(2-hydroxyhexafluoroisopropyl)styrene and allyl alcohol in polymer component A) is less than 10 wt.-%.

**2.** Compatible polymer mixture PM according to claim 1, characterised in that polymer B) is made up of at least 2 wt.-% of a monomer of formula I and at least 40 wt.-% of monomers of formula II

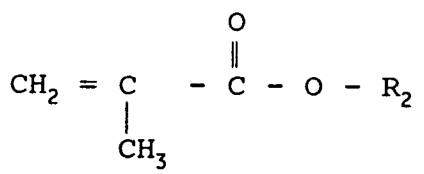

, II

wherein $R_2$ represents methyl, ethyl, propyl and n-butyl.

**3.** Compatible polymer mixture PM according to claims 1 and 2, characterised in that the polymer B) is made up of at least 5 wt.-% of monomers of formula I.

**4.** Compatible polymer mixture PM according to claims 1 - 3, characterised in that the polymer B) is made up of at least 10 wt.-% of monomers of formula I.

**5.** Compatible polymer mixture PM according to claims 1 - 4, characterised in that polymer A) is made up of at least 20 wt.-% of $\alpha$-methylstyrene and at least 40 wt.-% of monomers of formula II.

**6.** Compatible polymer mixture PM according to claims 1 - 4, characterised in that polymer A) is made up of at least 20 wt.-% of $\alpha$-methylstyrene and at least 20 wt.-% of another styrene distinguishable from $\alpha$-methylstyrene or a styrene derivative.

**7.** Compatible polymer mixture PM according to claims 1 - 6, characterised in that the mouldings produced from the polymer mixture have a Vicat softening temperature according to DIN 53460 of > 115 ° C.

**8.** Compatible polymer mixture PM according to claims 1 - 7, characterised in that the mouldings produced from the polymer mixture PM have a Vicat softening temperature according to DIN 53460 of > 125 ° C.

9. Compatible polymer mixture PM according to claims 1 - 8, characterised in that the polymer mixture has good thermostability, characterised in that the TD-value is > 260 °C, the TD-value denoting the temperature at which the polymer sample suffers a 2% weight loss at a heating rate of 5 °C per minute in vacuo.

10. Compatible polymer mixture PM according to claims 1 - 9, characterised in that the polymer mixture has a haze of < 10% (according to ASTM D1003) in the unpigmented state.

11. Compatible polymer mixture PM according to claims 1 - 10, characterised in that at least one of the polymers of the mixture has a molecular weight > 3,000.

12. Polymer composition consisting of 40 - 99 wt.-% of the compatible polymer mixture according to claims 1 - 11 and 60 - 1 wt.-% of a polymer P3 which is incompatible with A), B) and PM.

13. Polymer compositions according to claim 12, characterised in that the polymer P3 has a glass temperature of < 20 °C and is at least partly covalently bound to polymer A) or polymer B).

14. Object consisting of the polymer mixture PM according to claims 1 - 13, with a casing of polymer B).

**Revendications**

1. Mélange de polymères compatibles PM, formé de deux composants polymères:
   A) 1 - 99,9% en poids d'un polymère A) qui est composé, pour 20% au moins et jusqu'à 100% en poids, du monomère α-méthylstyrène et, pour 80 à 0% en poids, d'autres monomères copolymérisables avec l'α-méthylstyrène, et
   B) 99 - 0,1% en poids d'un polymère B) qui est composé, pour 2% au moins et jusqu'à 100% en poids, d'un monomère de formule I

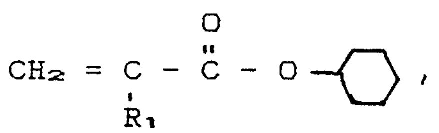

I

   dans laquelle $R_1$ est mis pour un atome d'hydrogène ou un reste méthyle, et, pour 98 à 0% en poids, d'autres monomères copolymérisables avec le monomère de formule I,

   étant spécifié que la part de monomères copolymérisables très polaires du groupe constitué par l'acrylonitrile, les imides et l'anhydride de l'acide maléique, le p-(2-hydroxyhexafluoro-isopropyl)-styrène et l'alcool allylique dans le composent polymère A) est inférieure à 10% en poids.

2. Mélange de polymères compatibles PM selon la revendication 1, caractérisé en ce que le polymère B) est composé, pour au moins 2% en poids, d'un monomère de formule I et, pour 40% au moins, de monomères de formule II

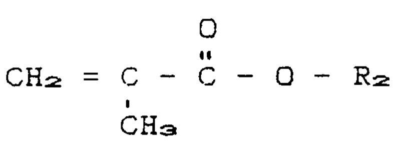

II

   dans laquelle $R_2$ est mis pour un reste méthyle, éthyle, propyle ou n-butyle.

3. Mélange de polymères compatibles PM selon la revendication 1 ou 2, caractérisé en ce que le polymère B) est composé, pour 5% en poids au moins, de monomères de formule I.

4. Mélange de polymères compatibles PM selon l'une quelconque des revendications 1 à 3, caractérisé

en ce que le polymère B) est composé, pour 10% en poids au moins, de monomères de formule I.

5. Mélange de polymères compatibles PM selon l'une quelconque des revendications 1 à 4, caractérisé en ce que le polymère A) est composé, pour 20% en poids au moins, d'α-méthylstyrène et, pour 40% en poids au moins, de monomères de formule II.

6. Mélange de polymères compatibles PM selon l'une quelconque des revendications 1 à 4, caractérisé en ce que le polymère A) est composé, pour 20% en poids au moins, d'α-méthylstyrène et, pour 20% en poids au moins, d'un autre styrène ou dérivé du styrène différenciable de l'α-méthylstyrène.

7. Mélange de polymères compatibles PM selon l'une quelconque des revendications 1 à 6, caractérisé en ce que les corps moulés fabriqués à partir du mélange de polymères présentent une température de ramollissement de Vicat (selon DIN 53 460) de plus de 115 °C.

8. Mélange de polymères compatibles PM selon l'une quelconque des revendications 1 à 7, caractérisé en ce que les corps moulés fabriqués à partir du mélange de polymères PM présentent une température de ramollissement de Vicat (selon DIN 53 460) de plus de 125 °C.

9. Mélange de polymères compatibles PM selon l'une quelconque des revendications 1 à 8, caractérisé en ce que le mélange de polymères possède une bonne thermostabilité, caractérisée en ce que la valeur TD est supérieure à 260 °C, la valeur TD désignant la température à laquelle l'échantillon de polymère subit une perte de poids de 2% au chauffage à raison de 5 °C/mn dans le vide.

10. Mélange de polymères compatibles PM selon l'une quelconque des revendications 1 à 9, caractérisé en ce qu'à l'état non pigmenté, le mélange de polymère présente un voile de moins de 10% (selon ASTM D1003).

11. Mélange de polymères compatibles PM selon l'une quelconque des revendications 1 à 10, caractérisé en ce que l'un au moins des polymères du mélange présente un poids moléculaire de plus de 3000.

12. Composition de polymères, formée de 40 - 99% en poids du mélange de polymères compatibles selon l'une quelconque des revendications 1 à 11 et de 60 - 1% en poids d'un polymère P3 qui n'est pas compatible avec A), B) et PM.

13. Compositions de polymères selon la revendication 12, caractérisées en ce que le polymère P3 présente une température de transition vitreuse inférieure à 20 °C et est en liaison covalente, au moins en partie, avec le polymère A) ou le polymère B).

14. Objet formé du mélange de polymères PM selon l'une quelconque des revendications 1 à 13, avec une enveloppe en polymère B).